# EUROPÄISCHE PATENTSCHRIFT

(11) **EP 2 956 319 B1**
(45) Veröffentlichungstag und Bekanntmachung des Hinweises auf die Patenterteilung: **19.10.2016**
(21) Anmeldenummer: 14701143.1
(22) Anmeldetag: 16.01.2014
(51) Int. Cl.: B60G 21/055, B60G 11/60, F16D 3/02

(54) **DREHFEDERSYSTEM FÜR EINE RADAUFHÄNGUNG EINES KRAFTFAHRZEUGS**
TORSION SPRING SYSTEM FOR A WHEEL SUSPENSION OF A MOTOR VEHICLE
SYSTÈME DE BARRE DE TORSION CONÇU POUR UNE SUSPENSION DE ROUE D'UN VÉHICULE AUTOMOBILE

(30) Priorität: 16.02.2013 DE 102013002714
(43) Veröffentlichungstag der Anmeldung: 23.12.2015
(73) Patentinhaber: Audi AG, 85045 Ingolstadt (DE)
(72) Erfinder: MOHRLOCK, Dominik, 85114 Buxheim (DE); SCHINDLER, Andreas, 85055 Ingolstadt (DE); BERINGER, Heinrich, 85095 Denkendorf (DE); SCHMITT, Joachim, 85051 Ingolstadt (DE)
(74) Vertreter: Reichert, Thomas Klaus
(86) Internationale Anmeldenummer: PCT/EP2014/000103
(87) Internationale Veröffentlichungsnummer: WO 2014/124722

(56) Entgegenhaltungen:
- EP-A1- 1 785 294
- EP-A1- 2 011 674
- EP-A1- 2 213 489
- EP-A1- 2 508 368
- EP-A2- 1 270 285
- EP-A2- 1 275 535
- WO-A1-03/068541
- DE-A1-102009 005 899
- DE-A1-102009 047 123
- DE-A1-102009 047 128
- DE-A1-102011 080 055
- DE-C- 649 020
- FR-A1- 2 874 860
- GB-A- 2 021 053
- US-A1- 2007 170 681

## Beschreibung

Die vorliegende Erfindung betrifft ein Drehfedersystem für eine Radaufhängung eines Kraftfahrzeugs gemäß dem Oberbegriff des Patentanspruchs 1.

Eine solche Federungsanordnung ist beispielhaft aus der DE 10 2009 005 899 A1 bekannt. Die Federungsanordnung weist eine mittels eines Aktuators betätigbare Drehfederstab auf, die sich in der Fahrzeugquerrichtung bis etwa in die Fahrzeugquermitte erstreckt und radseitig auf einen Antriebshebel wirkt, der wiederum an einem Radführungselement der Radaufhängung angelenkt ist. In der DE 10 2009 005 899 A1 ist die Drehfederstab mehrteilig sowie in verschachtelter Anordnung ausgeführt, bei der zwei radial äußere Hohlstäbe sowie ein radial innenliegender Vollstab aus Federstahl vorgesehen sind, die über zum Beispiel Keilverzahnungen miteinander kraftübertragend verbunden sind.

In dem aus der DE 10 2009 005 899 A1 bekannten Drehfederstabsystem wird die Federarbeit im Wechselspiel der Ein- und Ausfederbewegung des Rades aufgenommen bzw. abgegeben. Gleichzeitig ist es möglich, mittels des Aktuators Momente zu überlagern, das heißt die Drehfederstäbe je nach Erfordernis aufzuziehen oder zu entspannen. Durch das Vorhandensein der Tragfeder als eine Hauptfeder müssen mit dem Drehsteller nur anteilig Stellkräfte zur Radlaständerung gestellt werden. Es findet ständig eine Überlagerung der Federkräfte aus Hauptfeder und Drehfederstab statt, und zwar je nachdem wie die Fahrsituation dies erfordert und die Steuerung dies vorgibt. Am Ausgang des Drehfederstabsystems befindet sich eine Schwinge, an deren Ende eine Koppel angelenkt ist. Die Koppel verbindet die Schwinge mit dem Trapezlenker, der mit dem Fahrzeugrad verbunden ist. Somit können die im Drehsteller erzeugten Drehmomente über den Lastpfad Motor/Getriebe/ Drehfederstab/Schwinge/Koppel/Trapezlenker/Fahrzeugrad letztlich als lineare Stellkräfte auf das Fahrzeugrad übertragen werden.

Bei dem oben dargelegten Drehfederstabsystem setzt sich der Drehfederstab lediglich aus zwei Komponenten, nämlich aus Rohrfeder und Vollstabfeder, zusammen. Demgegenüber sind die verbleibenden Komponenten im oben erwähnten Lastpfad absolut starr ohne Einfluss auf die Gesamtfederkonstante des Systems ausgelegt. Besteht nun beispielsweise Bedarf, einen weicheren Drehfederstab zu realisieren, so müsste als erste Maßnahme der Durchmesser von Rohrfeder und/oder Vollstabfeder reduziert werden. Mit dem Reduzieren des Durchmessers würde jedoch das Arbeitsvermögen des Drehfederstabes abnehmen und würden gleichzeitig auch die Spannungen überproportional zunehmen, so dass die Rohr- und Stabfeder verlängert werden müssten. Eine solche Längenänderung ist jedoch aufgrund der äußerst kritischen Platzverhältnisse im Bereich der Radaufhängung nicht durchführbar. Dies hat zur Folge, dass insbesondere bei kleineren Fahrzeugbaureihen, bei denen eine Reduzierung der Gesamtfedersteifigkeit unumgänglich ist, ein derartiger Drehsteller aufgrund der hohen Packungsdichte nicht eingebaut werden kann.

Aus der EP 2 011 674 A1 ist ein zweigeteilter Stabilisator für ein Kraftfahrzeug bekannt, dessen Stabilisatorabschnitte eine rotatorische Relativbewegung zueinander ausführen können und bei einer gegensinnigen Verdrehbelastung eine Rückstellkraft ausüben, die mittels eines Aktuators in Verbindung mit einem Getriebe einstellbar ist. In dem Getriebe ist ein Torsionsdämpfer vorgesehen. Mit Hilfe des Torsionsdämpfers können Getriebegeräusche vermieden werden, die aufgrund eines Zahnspiels zwischen den Getriebeelementen ansonsten entstehen. Der Torsionsdämpfer mindert derartige mechanische Geräusche innerhalb des Getriebes, wobei der Torsionsdämpfer derart ausgelegt ist, dass die Federrate der Stabilisatoranordnung davon unbeeinflusst ist. Das heißt die Federrate der Stabilisatoranordnung ist durch den Torsionsdämpfer nicht abgesenkt.

Die EP 2 508 368 A1, DE 10 2011 080 055 A1 und EP 2 213 489 A1 offenbaren weitere relevante Drehfedersysteme.

Die Aufgabe der Erfindung ist es, eine Federungsanordnung der gattungsgemäßen Art vorzuschlagen, bei der mit baulich und konstruktiv einfachen Mitteln die Federrate der Drehfederstäbe zusätzlich beeinflussbar ist.

Die Lösung dieser Aufgabe ist in den Merkmalen des Patentanspruchs 1 angeführt. Vorteilhafte und besonders zweckmäßige Ausgestaltungen der Erfindung beinhalten die Unteransprüche.

Gemäß dem kennzeichnenden Teil des Patentanspruches 1 ist der Drehstab zwischen dem Aktuator und dem Abtriebshebel nicht materialeinheitlich und/oder einstückig ausgebildet, sondern vielmehr zweiteilig mit einem ersten Teilstab und einem damit gekoppelten zweiten Teilstab. Zwischen den ersten und zweiten Teilstäben ist ein Federelement geschaltet. Auf diese Weise muss der Drehstab nicht mehr mit einer vorgegebenen ausreichend großen Torsionslänge bereitgestellt werden, um die Federrate auf einen vorgegebenen Wert abzusenken. Vielmehr wird die Federrate alleine mittels des zwischengeschalteten Federelements definiert. Die Torsionsbewegung wird daher bauraumgünstig durch das zwischen dem ersten und zweiten Teilstab des Drehstabs zwischengeschaltete Federelement vorgesehen.

Bevorzugt sind der erste Teilstab und der zweite Teilstab aus einer Ausgangslage zueinander um ein freies Bewegungsspiel um einen

Torsionswinkel verdrehbar angeordnet. Die Drehbewegung aus der Ausgangslage erfolgt unter Aufbau einer Rückstellkraft des Federelementes.

Der erste Teilstab und der zweite Teilstab können bevorzugt zueinander koaxial und/oder zwischen dem Aktuator und dem Abtriebshebel hintereinander in Reihe angeordnet sein. Entsprechend ist die Koppelstelle der beiden Teilstäbe zwischen dem Abtriebshebel und dem Aktuator angeordnet.

In einer Ausführungsform kann der erste Teilstab und der zweite Teilstab an der Koppelstelle Stützelemente aufweisen, die sich in der Axialrichtung einander überlappen. Zwischen den in der Axialrichtung ineinander verschachtelten Stützelementen der ersten und zweiten Teilstäbe kann das zumindest ein Federelement angeordnet sein.

In einer weiteren Ausführungsform kann der erste Teilstab und der zweite Teilstab an der Koppelstelle über ein Kugel-Rampen-System miteinander gekoppelt sein. Bei dem Kugel-Rampe-System sind am ersten Teilstab und am zweiten Teilstab jeweils in Umfangsrichtung verlaufende rampenartige Kulissenführungen vorgesehen, die schräg zu einer Rotationsebene gestellt sind. Zwischen den Kulissenführungen der ersten und zweiten Teilstäbe sind jeweils darauf auflaufende Kugeln vorgesehen. Die beiden Teilstäbe können durch ein Verdrehen zueinander um einen Axialhub auseinander bewegt werden. Der Axialhub erfolgt unter Aufbau einer, von dem Federelement bewirkten Rückstellkraft.

Der besondere Vorteil der Erfindung liegt in einer, im Vergleich zum Stand der Technik wesentlich einfacheren Auslegung der Motor-Getriebe-Einheit des Aktuators in Verbindung mit einem vereinfachten, insbesondere kürzer gestaltbaren Drehfederstab. Der erforderliche Federweg und die Federsteifigkeit beziehungsweise die Federrate bestimmt sich aus dem zwischen den beiden Teilstäben angeordneten Federelement.

Zur Erzielung einer baulich einfachen Konstruktion ist es von Vorteil, wenn der erste Teilstab und/oder der zweite Teilstab als Vollstäbe ausgeführt sind. Der Aktuator kann bevorzugt mit seinem Gehäuse bauteilsteif und/oder drehfest am Fahrzeugaufbau abgestützt sein.

In einer besonders bevorzugten Anordnung an einer Achse des Kraftfahrzeugs sind zwei quer zur Fahrzeuglängsrichtung ausgerichtete Drehfedersysteme vorgesehen, wobei deren Motor-Getriebe-Einheiten der Aktuatoren im Bereich der senkrechten Fahrzeuglängsmittelebene drehbar gelagert sind. Die Drehstäbe mit dem Abtriebshebeln können außenliegend dazu positioniert sein.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Fig. 1: eine Draufsicht auf die untere Ebene einer linksseitigen Radaufhängung einer Hinterachse eines Kraftfahrzeugs, mit einem unteren Querlenker, einem Stoßdämpfer und einem Drehfederstabsystem;
- Fig. 2: ein Ersatzschaltbild der Federungsanordnung nach Fig. 1 mit Darstellung von Einzelfederraten c₁ und c₂, die im Wesentlichen eine Gesamtfederrate bestimmen;
- Fig. 3: in einer vergrößerten Schnittansicht die Koppelstelle zwischen den beiden Teilstäben des Drehfederstabes; und
- Fig. 4: in einer Abwicklung das Primärteil des ersten Teilstabes und das Sekundärteil des zweiten Teilstabes eines Drehfederstabsystems gemäß einem weiteren Ausführungsbeispiel, wobei sich die Primär- und Sekundärteile in einer Ruhelage befinden;
- Fig. 5: eine Ansicht entsprechend der Fig. 4, bei der die Primär- und Sekundärteile aus der Ruhelage bis in einen aufgezogenen Zustand verdreht sind; und
- Fig. 6: in einer Draufsicht die Kulissenbahn des Primärteils des ersten Teilstabes des Drehfederstabsystems.

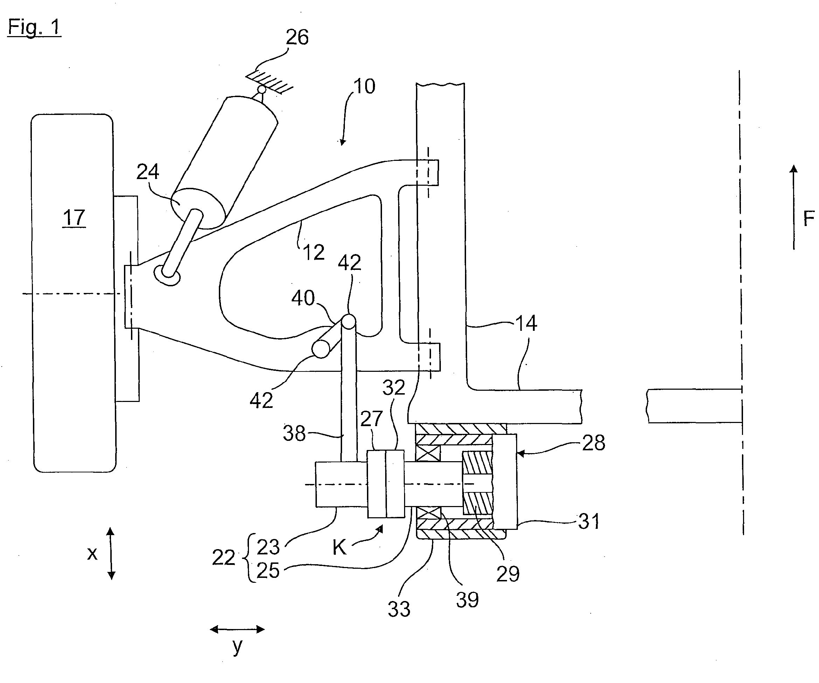

In der Fig. 1 ist mit 10 die untere Ebene einer linksseitigen Radaufhängung für ein Kraftfahrzeug bezeichnet, mit einem unteren Querlenker 12, der einerseits an einem nur abschnittsweise dargestellten Hilfsrahmen 14 und andererseits an einem nicht dargestellten Radträger für ein Hinterrad 17 angelenkt ist. Der den Radträger führende obere Querlenker oder Lenker ist nicht ersichtlich.

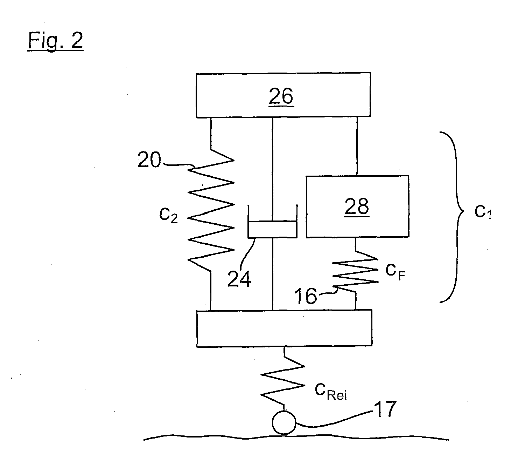

Die in der Fig. 1 gezeigte, linksseitige Radaufhängung weist einen Stoßdämpfer 24 mit davon getrennter Tragfeder 20 (nur in der Fig. 2 angedeutet) auf. Die erfindungsgemäße Federungsanordnung setzt sich gemäß der Fig. 1 aus einem in der Fahrzeugquerrichtung y verlaufenden Drehfederstab 22 als Speicherfeder noch zu beschreibender Konstruktion zusammen.

Der Stoßdämpfer 24 ist an dem unteren Querlenker 12 und oben in nicht näher dargestellter Weise am Aufbau 26 des Kraftfahrzeuges abgestützt, an dem auch der Hilfsrahmen 14 über schwingungsisolierende Lager befestigt ist.

Der Drehfederstab 22 ist in der Fig. 1 zweiteilig aus einem ersten Teilstab 23 und einem zweiten Teilstab 25 ausgeführt. Die Teilstäbe 23, 25 sind aus einem Vollmaterial gefertigt und an einer Koppelstelle K miteinander verbunden. Die Koppelstelle K besteht aus einem durchmessergrößeren ersten Primärteil 27, das drehfest am ersten Teilstab 23 angebunden ist, und aus einem Sekundärteil 32, das drehfest am zweiten Teilstab 25 angebunden ist. Zwischen dem Primärteil 27 und dem Sekundärteil 32 ist ein Federelement 16 geschaltet, wie es später noch beschrieben wird. Der Drehfederstab 22 erstreckt sich gemäß der Fig. 1 ausgehend von einem am Hilfsrahmen 14 befestigten, zylindrischen Aktuator 28 axial zur Fahrzeugaußenseite.

Das Gehäuse 31 des Aktuators 28 ist bauteilsteif und/oder drehfest an einer Lagerstelle 33 (Fig. 1) an einem fahrzeugaufbauseitigen Hilfsrahmen 14 abgestützt.

Der zweite Teilstab 25 des Drehfederstabs 22 ist an einer Lagerstelle 39 aus dem Aktuator 28 herausgeführt, während der erste Teilstab 23 an seinem äußeren Ende einen radial zum Querlenker 12 in der Fahrtrichtung F des Kraftfahrzeuges nach vorne abragenden Abtriebshebel 38 trägt, der über Lagerstellen 42 und eine etwa vertikal ausgerichtete Koppelstange 40 gelenkig mit dem Querlenker 12 verbunden ist.

Der Aktuator 28 ist eine Motor-Getriebe-Einheit, die sich in nur grob mit Bezugsziffer 29 angedeuteter Weise aus einem antreibenden Elektromotor und einem hoch übersetzenden Getriebe (zum Beispiel einem Harmonic-Drive-Getriebe oder einem Zykloidgetriebe) zusammensetzt, wobei das Abtriebselement des Getriebes mit dem zweiten Teilstab 25 des Drehfederstabs 22 trieblich verbunden ist. Die Gesamt-Federrate c_{F} (Fig. 2) des Drehfederstabs 22 bestimmt sich alleine aus der Federrate des Federelements 16, nicht jedoch aus den starren Teilstäben 23, 25 sowie den anderen Bauteilen, die im Kräftepfad zwischen dem Aktuator 28 und dem Radaufhängungselement 12 angeordnet sind.

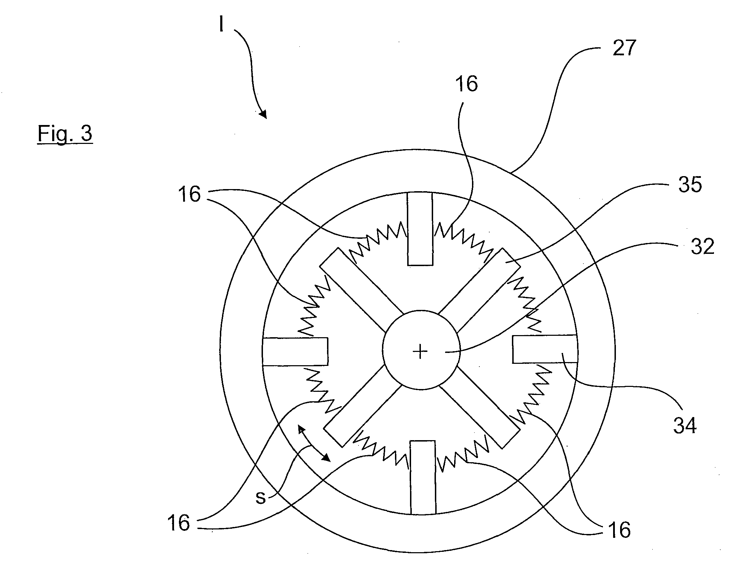

In der Fig. 3 ist das Primärteil 27 des ersten Teilstabes 23 gezeigt. Das Primärteil 27 des Teilstabes 23 ist hohlzylindrisch mit in der Radialrichtung nach innen abragenden Stützelementen 34 ausgebildet, die umfangsverteilt an der Innenwandung des Primärteiles 27 vorgesehen sind. Zwischen den Stützelementen 34 des Primärteiles 27 ragen sternförmig nach außen gerichtete Stützelemente 35 des Sekundärteiles 32 ein, so dass sich die Stützelemente 34, 35 der Primär- und Sekundärteile 27, 32 in Axialrichtung überlappen.

In der Fig. 3 sind die Stützelemente 34, 35 des ersten Teilstabs 23 und des zweiten Teilstabs 25 in einer Ausgangslage I gezeigt. Ausgehend von der Ausgangslage I können die beiden Teilstäbe 23, 25 zueinander gegensinnig in Umfangsrichtung um ein freies Bewegungsspiel s, das heißt um einen vorgegebenen Torsionswinkel, verdreht werden. Eine solche Verdrehung erfolgt unter Aufbau einer Rückstellkraft des Federelementes 16. In der Fig. 3 weist das Federelement 16 eine Mehrzahl von Schraubendruckfedern auf, die jeweils zwischen den Stützelementen 34, 35 der Primär- und Sekundärteile 27, 32 angeordnet sind.

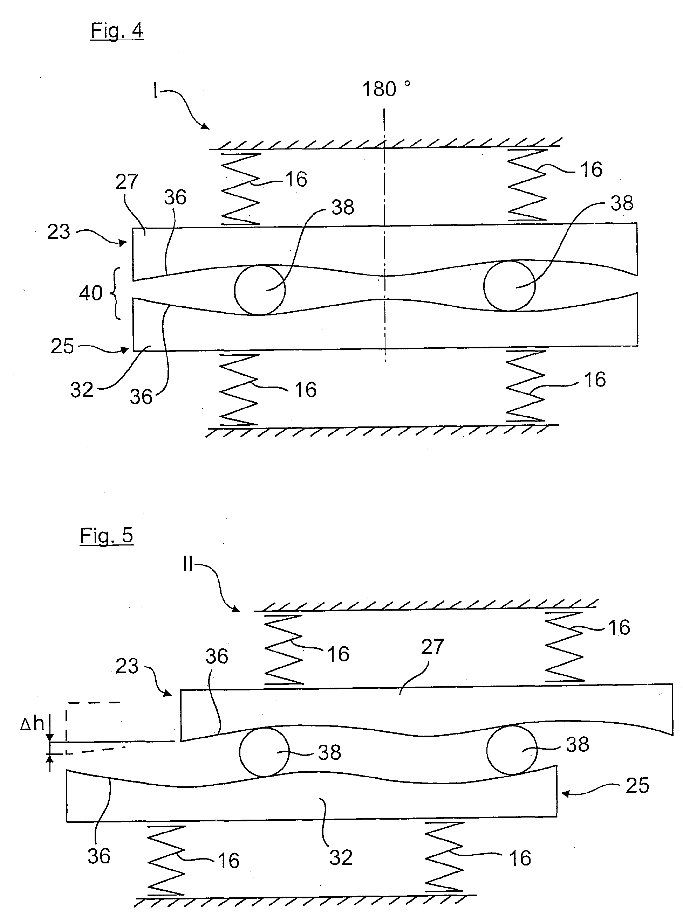

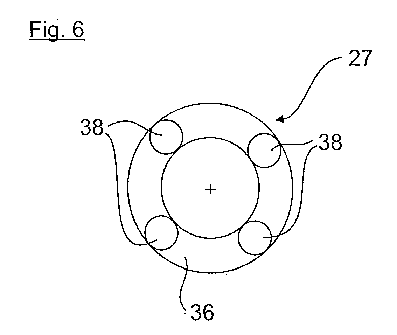

In den Fig. 4 bis 6 ist ein weiteres Ausführungsbeispiel der Erfindung nur grob angedeutet. Demzufolge ist in der Fig. 4 das Primärteil 27 des ersten Teilstabes 23 über ein Kugel-Rampe-System 40 mit dem Sekundärteil 32 des zweiten Teilstabes 25 gekoppelt. Das in der Fig. 4 in einer Ruhelage I dargestellte Kugel-Rampe-System 40 ist aus Gründen der Übersichtlichkeit in einer Abwicklung gezeigt.

An den einander zugewandten Seiten der Primär- und Sekundärteile 27, 32 sind jeweils gemäß den Fig. 4 bis 6 angedeutete Kulissenführungen 36 vorgesehen. Die Kulissenführungen 36 verlaufen in Umfangsrichtung wellenförmig, das heißt mit axial vorragenden Wellenbergen sowie zwischengeordneten, zurückgesetzten Wellentälern. Zwischen den Kulissenführungen 36 des Primärteiles 27 und des Sekundärteiles 32 sind jeweils darauf auflaufende Kugeln 38 angeordnet.

Bei einem zueinander gegensinnigen Verdrehen der beiden Teilstäbe 23, 25 rollen die Kugeln 38 auf den Flanken der wellenförmigen Kulissenführungen 36 ab. Die beiden Teilstäbe 23, 25 werden dadurch ausgehend von der Ruhelage I (Fig. 4) um einen Axialhub Δh auseinander bewegt, und zwar unter Aufbau einer von dem Federelement 16 bewirkten Rückstellkraft bis in einen aufgezogenen Zustand II (Fig. 5). Das Federelement 16 ist gemäß den Fig. 4 und 5 durch zwei Schraubenfedern ausgebildet, mit denen das Primärteil 27 und das Sekundärteil 32 aufeinander gedrückt werden.

In der Fig. 2 ist ein Ersatzschaltbild das Zusammenwirken der Federungsanordnung einer Radaufhängung 10 unter Verwendung der gleichen Bezugszeichen gezeigt.

Wie ersichtlich ist, sind zwischen dem Aufbau 26 des Kraftfahrzeuges und dem Rad 17 bzw. dem Querlenker 12 die parallel geschalteten Federsysteme c₂ (Tragfeder 20) und c₁ (das Federelement 16 des Drehfederstabs 22) wirksam, die die Gesamtfederrate bestimmen (eingezeichnet ist der Vollständigkeit halber auch die Federrate c_{Rei} des Rades 17 bzw. dessen Reifens).

Durch das Federelement 16 kann die über den Aktuator 28 gesteuerte Federrate c₁ als Speicherfeder und damit verbunden die Gesamtfederrate c_{ges} (c₁ + c₂) vermindert bzw. vorteilhaft an konstruktive Gegebenheiten angepasst werden.

## Patentansprüche

1. Drehfedersystem für eine Radaufhängung eines Kraftfahrzeugs, mit einem das Drehfedersystem variabel vorspannenden, am Fahrzeugaufbau (26) angeordneten Aktuator (28), der über einen Drehstab (22) und einen Abtriebshebel (38) mit einer Vorspannkraft auf ein Radaufhängungselement (12) der Radaufhängung wirkt, **dadurch gekennzeichnet, dass** der Drehstab (22) zwischen dem Aktuator (28) und dem Abtriebshebel (38) zweiteilig mit einem ersten Teilstab (23) und einem damit gekoppelten zweiten Teilstab (25) unter Zwischenschaltung eines Federelements (16) ausgeführt ist.

2. Drehfedersystem nach Anspruch 1, **dadurch gekennzeichnet, dass** der erste Teilstab (23) und der zweite Teilstab (25) aus einer Ausgangslage (I) zueinander um ein freies Bewegungsspiel (s) um einen Torsionswinkel verdrehbar sind, und zwar unter Aufbau einer Rückstellkraft des Federelements (16).

3. Drehfedersystem nach Anspruch 1 oder 2, **dadurch gekennzeichnet, dass** der erste Teilstab (23) und der zweite Teilstab (25) zueinander koaxial und/oder zwischen dem Aktuator (28) und dem Abtriebshebel (38) hintereinander in Reihe angeordnet ist.

4. Drehfedersystem nach einem der vorhergehenden Ansprüche, **dadurch gekennzeichnet, dass** der erste Teilstab (23) und der zweite Teilstab (25) in der Axialrichtung einander überlappende Stützelemente (34, 35) aufweisen, zwischen denen das Federelement (16) angeordnet ist.

5. Drehfedersystem nach Anspruch 1, 2 oder 3, **dadurch gekennzeichnet, dass** der erste Teilstab (23) und der zweite Teilstab (25) über ein Kugel-Rampe-System (40) miteinander gekoppelt ist, bei dem am ersten Teilstab (23) und am zweiten Teilstab (25) in Umfangsrichtung verlaufende rampenartige oder wellenförmige Kulissenführungen (36)mit darauf auflaufenden Kugeln (38) vorgesehen sind, wobei die beiden Teilstäbe (23, 25) durch ein gegensinniges Verdrehen zueinander um einen Axialhub (Δh) auseinander bewegbar sind, und zwar unter Aufbau einer von dem Federelement (16) bewirkten Rückstellkraft.

6. Drehfedersystem nach einem der vorhergehenden Ansprüche, **dadurch gekennzeichnet, dass** der erste Teilstab (23) und/oder der zweite Teilstab (25) aus einem Vollmaterial gefertigt sind.

7. Drehfedersystem nach einem der vorhergehenden Ansprüche, **dadurch gekennzeichnet, dass** der Aktuator (28) mit seinem Gehäuse (31) bauteilsteif und/oder drehfest an einer Lagerstelle (33) am Fahrzeugaufbau (26), insbesondere an einem fahrzeugaufbauseitigen Hilfsrahmen (14), abgestützt ist.

8. Drehfedersystem nach einem der vorhergehenden Ansprüche, **dadurch gekennzeichnet, dass** an einer Achse des Kraftfahrzeugs zwei quer zur Fahrzeuglängsrichtung ausgerichtete Drehfedersysteme vorgesehen sind, wobei deren Aktuatoren (28) im Bereich der senkrechten Fahrzeugmittelebene (18) bauteilsteif bzw. drehfest gelagert sind.

## Claims

1. Torsion spring system for a wheel suspension of a motor vehicle, with an actuator (28) arranged on the vehicle body (26) and variably tensioning the torsion spring system, which acts via a torsion bar (22) and a drive lever (38) with a tensioning force on a wheel suspension element (12) of the wheel suspension, **characterised in that** the torsion bar (22) between the actuator (28) and the output side lever (38) is implemented in two parts with a first partial bar (23) and a second partial bar (25) coupled thereto with the interposition of a spring element (16).

2. Torsion spring system according to claim 1, **characterised in that** the first partial bar (23) and the second partial bar (25) can be rotated relative to one another from an initial position (L) with a free movement play (s) about a torsion angle, and specifically under the build-up of a restoring force of the spring element (16).

3. Torsion spring system according to claim 1 or 2, **characterised in that** the first partial bar (23) and the second partial bar (25) are arrange co-axially with respect to one another and/or in series behind one another between the actuator (28) and the output side lever (38).

4. According to one of the preceding claims, **characterised in that** the first partial bar (23) and a second partial bar (25) comprise support elements (34, 35) overlapping one another in the axial direction, between which the spring element (16) is arranged.

5. Torsion spring system according to claim 1, 2 or 3, **characterised in that** the first partial bar (23) and a second partial bar (25) are connected to one another via a ball-ramp system (40), in which ramp-like or undulating sliding block guides (36) running in the circumferential direction with ball bearings (38) running thereon are provided on the first partial bar (23) and on the second partial bar (25), wherein the two partial bars (23, 25), can be moved apart by an opposite rotation to one another by an axial stroke (Δh), and specifically with the build-up of a restoring force exerted by the spring element (16).

6. Torsion spring system according to one of the preceding claims, **characterised in that** the first partial bar (23) and/or the second partial bar (25) are produced from a solid material.

7. Torsion spring system according to one of the preceding claims, **characterised in that** the actuator (28) with its housing (31) is supported rigidly and/or in a torque-proof manner on a bearing position (33) on the vehicle body (26), in particular on an auxiliary frame (14) on the vehicle body side.

8. Torsion spring system according to one of the preceding claims, **characterised in that** two torsion spring systems aligned transverse to the longitudinal direction of the vehicle are provided on a shaft of the motor vehicle, the actuators (28) being supported in a rigid or torque-proof manner in the region of the perpendicular central plane (18) of the vehicle.

## Revendications

1. Système de ressort de torsion pour une suspension de roue d'un véhicule à moteur avec un actionneur (28) monté sur le châssis (26) à précontrainte variable du système de ressort de torsion qui, à travers une barre de torsion (22) et un levier d'actionnement (38) avec une force de précontrainte agit sur un élément de suspension de roue (12), **caractérisé par le fait que** la barre de torsion (22) est placée entre l'actionneur (28) et le levier d'actionnement (38) et présente deux parties dont une première tige partielle (23) et une deuxième tige partielle (25) couplée à la première par l'intermédiaire d'un élément ressort (16).

2. Système de ressort de torsion selon la revendication 1 **caractérisé en ce que** la première tige partielle (23) et la deuxième tige partielle (25) sont pivotantes l'une par rapport à l'autre au niveau d'une zone de sortie (I) avec un jeu libre de mouvement (s) présentant un débattement d'angle de torsion en constituant une force de rappel de l'élément ressort (16).

3. Système de ressort de torsion selon la revendication 1 ou 2 **caractérisé en ce que** la première tige partielle (23) et la deuxième tige partielle (25) sont coaxiales et/ou sont montées en série l'une derrière l'autre entre l'actionneur (28) et le levier d'actionnement (38).

4. Système de ressort de torsion selon l'une des revendications précédentes **caractérisé en ce que** la première tige partielle (23) et la deuxième tige partielle (25) présentent dans la direction axiale, des éléments de support (34, 35) se chevauchant, entre lesquels est agencé l'élément ressort (16).

5. Système de ressort de torsion selon la revendication 1, 2 ou 3 **caractérisé en ce que** la première tige partielle (23) et la deuxième tige partielle (25) sont couplées ensemble par l'intermédiaire d'un système à rampe sphérique (40) dans lequel au niveau de la première tige partielle (23) et de la deuxième tige partielle (25) dans la direction circonférentielle sont prévus des guidages coulissants (36) s'étendant en rampe ou en forme d'onde sur lesquels se déplacent des billes (38), les deux tiges partielles (23, 25) étant déplaçables en écartement l'une de l'autre par un pivotement contraire d'une amplitude axiale (Δh) et à savoir en constituant une force motrice de rappel de l'élément ressort (16).

6. Système de ressort de torsion selon l'une des revendications précédentes **caractérisé en ce que** la première tige partielle (23) et/ou la deuxième tige partielle (25) sont réalisées dans un matériauplein.

7. Système de ressort de torsion selon l'une des revendications précédentes **caractérisé en ce que** l'actionneur (28) avec son boîtier (31) est un composant rigide et/ou rigide en torsion qui est maintenu en un endroit de pose (33) sur le châssis (26) du véhicule, en particulier sur un châssis auxiliaire (14) du véhicule.

8. Système de ressort de torsion selon l'une des revendications précédentes **caractérisé en ce que** sont prévus deux systèmes de ressort de torsion sur un axe du véhicule à moteur transversalement à la direction longitudinale du véhicule, dont les actionneurs (28) sont montés rigides en torsion respectivement en tant que composants rigides dans la région du plan médian gauche du véhicule (18).
